(19) **Europäisches Patentamt / European Patent Office / Office européen des brevets**

(11) **EP 3 900 447 B1**

(12) **EUROPEAN PATENT SPECIFICATION**

(45) Date of publication and mention
of the grant of the patent:
**29.11.2023 Bulletin 2023/48**

(21) Application number: **19832599.5**

(22) Date of filing: **13.12.2019**

(51) International Patent Classification (IPC):
**H04W 56/00** *(2009.01)*

(52) Cooperative Patent Classification (CPC):
**H04W 56/009; H04W 56/0015; H04W 56/0045;
H04W 56/006**

(86) International application number:
**PCT/EP2019/085195**

(87) International publication number:
**WO 2020/126945 (25.06.2020 Gazette 2020/26)**

(54) **METHOD FOR ESTIMATING TIMING ADVANCE IN LARGE CELL AREA**

VERFAHREN ZUR SCHÄTZUNG DES ZEITVORLAUFS IN EINER GROSSEN ZELLFLÄCHE

PROCÉDÉ D'ESTIMATION D'AVANCE DE SYNCHRONISATION DANS UNE ZONE À GRANDES CELLULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2018 EP 18213649**

(43) Date of publication of application:
**27.10.2021 Bulletin 2021/43**

(73) Proprietor: **Telit Cinterion Deutschland GmbH
81541 München (DE)**

(72) Inventors:
• **BREUER, Volker
16727 BOETZOW (DE)**
• **WEHMEIER, Lars
14612 FALKENSEE (DE)**

(74) Representative: **Pearl Cohen Zedek Latzer Baratz
UK LLP
The Gridiron Building
One Pancras Square
London N1C 4AG (GB)**

(56) References cited:
WO-A1-2018/141179      US-A1- 2009 161 599
US-A1- 2017 111 908

**Description**

**FIELD OF THE INVENTION**

The present invention relates to a method for estimating an initial timing advance value for a user equipment.

The invention also pertains to a user equipment using said method.

The invention further relates to a method for a base station said user equipment is operating with. The invention also pertains to a base station using said method.

**BACKGROUND OF THE INVENTION**

Generally, in the field of wireless communication the timing advance is known as a measure that is elaborated for synchronization of the user equipment with a base station. The value indicates the time gap that a wireless user equipment needs to send earlier in order to arrive at the base station at the expected time slot, under consideration of signal propagation delay. This applies especially to all cellular networks in 2G, 4G and beyond being based on a time-frequency grid. The timing advance (TA) is needed to ensure the arrival of the signals from different users having different distances to arrive at the base station at the designated time to comply to the time x frequency grid.

Under consideration of the maximum cell size of about 35km for GSM the maximum timing advance value was defined.

However, with the upcoming technology evolvements of 5G much larger cells are possible, hence the maximum timing advance value is not sufficient anymore. 4G and especially upcoming 5G have the aim to address cells up to 100 km. Besides sufficiently long timing advance range also the initial window, i.e. when the UE does its first transmission without TA needs to be correspondingly long requiring uplink resources reducing the capacity correspondingly.

By now it is only known to use extended time windows for receiving the signals in larger cells. However this is rather resource consuming and for a large amount of user equipments camping in such a base station (in 5G: gNB) covering such a large cell is disadvantageous.

Hence it requires additional methods for a user equipment for defining timewise correction for signalling to the base station, in particular when the user equipment is moving.

The initial timing advance calculation is in particular performed during RACH access to the base station. It is known the 4-step RACH access and the 2-step RACH access. In the 4-step RACH the base station calculates a timing advance based on first uplink transmission (msg1) and reports said value during RACH procedure (msg2) to the user equipment. In the 2-step RACH access so far the timing advance is either supposed to be known in advance or the cell is very small so that timing deviations due to signal travelling times do not matter. The latter is in particular appropriate for fixed devices in very small cells, where timing advance does not need to be considered. As set out in 3GPP TSG-RAN WG2 TDoc R2-1700413 "On Two-step Random Access and Random Access Latency" (Ericsson) the 2-step RACH is advantageous for the user equipment as it is way faster and hence results in less latency, and additionally requires less signalling for base station and user equipments. However it requires a pre-known accurate timing advance which can be used/re-used in order to successfully carry out preferably the 2-step RACH.

Prior art documents US 2017/111908 A1, WO 2018/141179 A1 and US 2009/161599 A1 also teach improved estimation methods of the timing advance for a user equipment operating in large cells.

It is therefore the goal of present invention to propose a solution for an improved estimation of timing advance conducted by a user equipment operating in large cells for carrying out a first access message to the base station.

Further alternative and advantageous solutions would, accordingly, be desirable in the art.

**SUMMARY OF THE INVENTION**

For this it is according to a first aspect of the invention suggested a method to operate a user equipment according to claim 1. It is further suggested according to a second aspect of the invention a user equipment according to claim 5.

According to the first aspect of the invention it is proposed a method for a user equipment operating in a cellular network according to claim 1.

The inventive method relates to a user equipment being capable of operating with a base station of a cellular network for wireless communication, in particular those implementing the wireless technology standards like 4G (LTE), 5G (New Radio) or beyond.

It is in particular applicable to base stations covering a large area, in particular larger than 15km. A cell of a base station is in particular rated as a large cell, when the timing advance needed for a user equipment is larger than the specified RACH window. The RACH window has a size of 200 $\mu$s.

The inventive method is in the first place applied to large cell base stations, however for a user equipment it is needed to operate with large cell base stations and non-large cell base stations.

Mainly the inventive method relates to the initial RACH message on the PRACH channel with the preamble for a contention based RACH communication.

Normally the user equipment would send the RACH message to the base station and in normal sized cells the request could be received by the base station in a respective RACH window comprising a RACH preamble. With a PRACH response message the base station provides information to the requesting user equipment including a timing advance value which the base station derives from the received initial RACH message.

For a large cell the problem appears that the initial RACH message does not arrive in the prior mentioned RACH window. Hence, the initial message for setting up a connection resp. for registering on the base station might fail. Or to allow the support of user equipment being far away from the base station the RACH window needs to be enhanced correspondingly which leads to a loss of UL resources as during said extension time the UL resources cannot be used for other purposes.

Here is where the inventive method comes into play. According to that the user equipment carries out before sending a preamble message, in particular mentioned initial RACH message, to the base station a couple of additional steps.

First the user equipment receives information from the base station regarding an expected submission time of the preamble message. The submission time depicts the point in time when the preamble message is expected to be received by the base station. It lies among the RACH window.

Preferably this information is submitted by means of a broadcast, in particular as part of the SIBs or the MIB (the latter for LTE and beyond) which refers to the received DL.

The indication related to the submission time is typically depicted as a system frame number (SFN).

The next step carried out by the user equipment comprises estimation of a timing advance value relating to a signal transmission from the user equipment to the addressed base station. Timing advance as such is a negative offset, at the user equipment, between the start of a received downlink subframe and a transmitted uplink subframe. This offset at the user equipment is necessary to ensure that the downlink and uplink subframes are synchronized at the base station resp. eNodeB.

Effectively the time for transmission is needed to be determined, so that with the timing advance value a value is estimated that the user equipment needs to signal earlier than the submission time received from the base station, in order to achieve that the preamble message arrives as good as possible at the submission time.

Obviously this timing advance value gets larger when the cell is getting larger. hence the distance between the user equipment and the base station plays a decisive role. However, the distance may be calculated in time or spatial distance.

From the estimated distance value the timing advance value can easily be translated, as taking into account the radio wave travelling time as speed of light in $3*10^8$ m/s. The timing advance value is usually coded as incrementing values with respect to TS where TS is 1/(2048x15000). Maximum number of FFTs + subcarrier spacing is 15kHZ. Where 1 Ta=16Ts this corresponds to ~$0.52\mu s$. And with a maximum of Ta=1282 this corresponds to 1282xTs which corresponds to 667,6ps. Translating this to a travelling time with speed of light it corresponds to 100,15km.

So the calculation when a certain distance between the base station and user equipment is determined is trivial. However, the problem so far lies in the first uplink transmission being done without TA corrections and hence may arrive with said delay at the base station and requires a corresponding number of subframes depending on the distance. To circumvent said problem the user equipment performs a calculation of the distance. Deriving from said distance an initial TA is trivial as shown above.

For the distance calculation various approaches are encompassed by the invention, either alone or in combination.

It is suggested that the step of estimating the timing advance value from the user equipment to the addressed base station comprises:

- measuring a received reference signal from said base station,
- deriving attenuation value from said measured signal,
- wherein the step of calculating a distance value is based on a propagation delay model using line-of-sight.

The distance is calculated by deriving the delay resp. pathloss of signals from the received reference signals of the base station. This is preferably for large cell situations advantageous, as such cells are supposed to appear in areas without many buildings or other obstacles, e.g. over the sea, in a desert or other outbacks.

The user equipment receives and measure signals from the base station comprising so-called reference signals. The user equipment can derive the attenuation of said reference signals by means of measuring the received signal strength in comparison with the signal strength at its source. Preferably it is suggested that the base station broadcasts - e.g. in the SIBs - with which signal strength the reference signal is transmitted.

Alternatively or additionally this information is already available at the user equipment, e.g. from a previous attachment to the base station or another base station of the cellular network, in case the signal strength of the reference signal is a network defined constant.

The RSCP pathloss is calculated as:

$$FSPL \ (in \ dB) = 20log(distance \ in \ m) + 20log \ (f) + 20log \ (4pi/c)$$

$$FSPL \ (in \ dB) = 20log(distance \ in \ m) + 20log \ (f) - 147,55$$

Hence in typical radio frequencies this could also be approximated by

$$PL \sim 40 + 20log(distance \ in \ m)$$

Under assumption that the signal is running at line-of-sight, the determined pathloss can be calculated into a distance in meters. The formula is well known in literature.

Obviously the more obstacles lead to reflections this calculated value might be not fully accurate. However for the envisaged areas it is very well suited to make the distance calculation in this way.

In a different method the broadcast or another repeatedly occurring signal could also include a timestamp being referenced to the beginning or the end of the transmitted signal i.e. when the entire message left the base station and the user equipment would record the receiving time and once processed compare receiving and transmitting time. Or knowing its processing and deriving from that the reception time. However, this requires certain estimates whereas other methods seem to be better and more suitable to be realized. As a second approach it is suggested wherein the step of calculating the distance comprises ascertaining the geographical position of the user equipment and the geographical position of the addressed base station, and carrying out a bee line distance calculation between both positions.

This is another advantageous embodiment for calculating the distance between user equipment and base station.

For that the geographical positions need however be known. For user equipments it is meanwhile common to have additionally available a chip for accessing signals from a global navigation satellite system (GNSS), e.g. GPS, Galilleo, Glonass, Beidou. This would make available such location information. Usage of other sensors, like beacon, dead-reckoning, and also cellular network based positioning, or a combination thereof, are also encompassed by this embodiment. In case of a stationary installed user equipment the current position may even be preconfigured, e.g. through manual input or automatic detection through a temporary connected positioning sensor.

For having available the geographic position of the base station, a couple of options are available.

The first option comprises that the user equipment has available a lookup table, like a codebook, where for a certain global cell Id the geographic position is maintained. Preferably this codebook mainly comprises the positions for large cell base stations. These will most probably be quite stable and do not require frequent updates.

Alternatively it is proposed as part of another preferred embodiment that the step of ascertaining the geographical position of the address base station comprises retrieving a broadcast signals transmitted by the addressed base station comprising a representation of the current geographical position of the base station.

With that embodiment the base station itself provides its current position. This is in particular preferably for base stations which are not fixed.

In particular this is the case for a base station installed on a satellite. As this is one of the use cases for the inventive method, it is proposed that such base station provide an information about its current geographic position through the broadcast, e.g. the SIBs.

Preferably the geographic position is provided by way of latitude/longitude or a representation there of, like a quadtree-code or other type of two-dimensional index.

The distance is then simply calculated, where depending upon the needed accuracy and the processing power various calculation formulas are available. The most accurate, based on a sphere, is the orthodrome calculation, which basically calculates a great circle (a virtual meridian) linking both positions, and derives which share of the great circle lies between both positions. The great circle has assumed the length of the equator (40075km), hence with the share the distance is easily calculated.

Other calculation schemes, like rhumb line/loxodrome or a simple flat calculation with longitudinal cosine reduction might also be used and are preferable for user equipments with limited processing power.

Preferably the step of calculating the distance comprises said calculation of the distance based on attenuation value and said calculation of the distance based on geographical positions, and wherein in case of a difference between said calculating distances, the step of translating the distance value into the timing advance value considering the larger of said calculated distances. This embodiment comprises that a combination of distance calculation methods are carried out, in particular via pathloss calculation and geospacial calculation. However, when both calculations lead to different values, then preferably the larger value is taken into account.

As it is shown when the distance is calculated the timing advance value is easily derived.

What is however needed is the point in time to send the preamble message. For coming to this a signal offset value is calculated based on the estimated timing advance value. The signal offset is a time value in $\mu s$, and this can be derived from the timing advance value, as mentioned before, that 1 timing advance value unit relates to 3,69 $\mu s$.

The point in time for sending the preamble message is then calculated by:

$$\textit{point in time for preamble message =}$$
$$\textit{indicated submission time − signal offset}$$

This fully defines when the preamble message is to be sent, in order to assure that the message is well received at the base station in the respective RACH window.

Finally inventive method comprises that the preamble message is submitted at the calculated point in time by the user equipment to the base station. This preamble message additionally comprises the value relating to the estimated timing advance value.

That estimated timing advance value informs the addressed base station about the estimation the user equipment made based on the available information about the distance between both, and consequently the applied timing advance, on which basis the point in time of submitting the preamble message was induced.

As the indicated submission time is relative to frame borders, it is recurring. Hence, should the calculated point in time have already passed, then the user equipment waits for the next frame, when sufficient time before the indicated submission time arrives.

In a preferred embodiment it is proposed that method further comprises the steps of

- retrieving a response message from the base station in response to said preamble message, said response message comprising a value relating to a timing advance correction relating to said estimated timing advance value.
- sending a message to the base station by considering said received timing advance correction value.

This embodiment relates to the response from the base station when the preamble message was well received. With that the user equipment is mainly informed about a timing advance correction value. This timing advance correction value is supposed to be used for the subsequent communication. The timing advance correction value is based on the estimated timing advance value which was provided by the user equipment with the preamble message and was taken into account for defining the point in time for submitting the preamble message in order to meet the indicated submission time.

With providing with the preamble message the estimated timing advance value it is achieved first that the user equipment can also in large cell areas submit its preamble message without increasing the RACH window size at the base station and waste resources there.

Additionally it allows - at least as an option - that the user equipment starts the 2-step-RACH procedure. The 2-step-RACH procedure expects that the user equipment can apply an accurate timing advance value. It is known that in particular in the case of very small cells or for stationary operated user equipments, who received the timing advance value in earlier interaction with the same base station, the 2-step RACH procedure is applicable.

With the inventive method however this is also applicable for the scenario of large cells or where a very good estimation of the timing advance value is possible to be carried out.

The 2-step-RACH procedure saves signalling, delay and power consumption, hence it is advantageous both for the user equipment and the cellular network resp. the addressed base station.

According to the second aspect of the invention it is proposed a user equipment for operating in a cellular network comprising a plurality of base stations according to claim 5.

The user equipment provides a couple of components for conducting wireless communication. This comprises at least processing circuitry for executing operation software, in particular those implementing the method of the first aspect of the invention.

Further the user equipment comprises transmitting and receiving circuitry in connection with at least one antenna, typically a transceiver for exchanging wireless communication signals with a base station of the cellular network. Further a memory unit for volatiles and/or permanent storage of executable software, configuration data like a codebook and measured data e.g. before receiving the transmission from the serving base station.

The second aspect of the invention shares the advantages of the first aspect of the invention.

As it is shown this invention advantageously solves the depicted problem and suggests an improved way of connection setup of a user equipment, in particular in large area cells.

## BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.

Fig. 1    represents a user equipment of the type to which the present invention is applied as an embodiment in conjunction with the base station;

Fig. 2    shows a first sequence diagram showing the 4-step approach for RACH access according to the prior art;

Fig. 3    shows a second sequence diagram showing the 4-step approach for RACH access according to an advantageous embodiment of the invention;

Fig. 4    shows a third sequence diagram showing the 2-step approach for RACH access according to another advantageous embodiment of the invention.

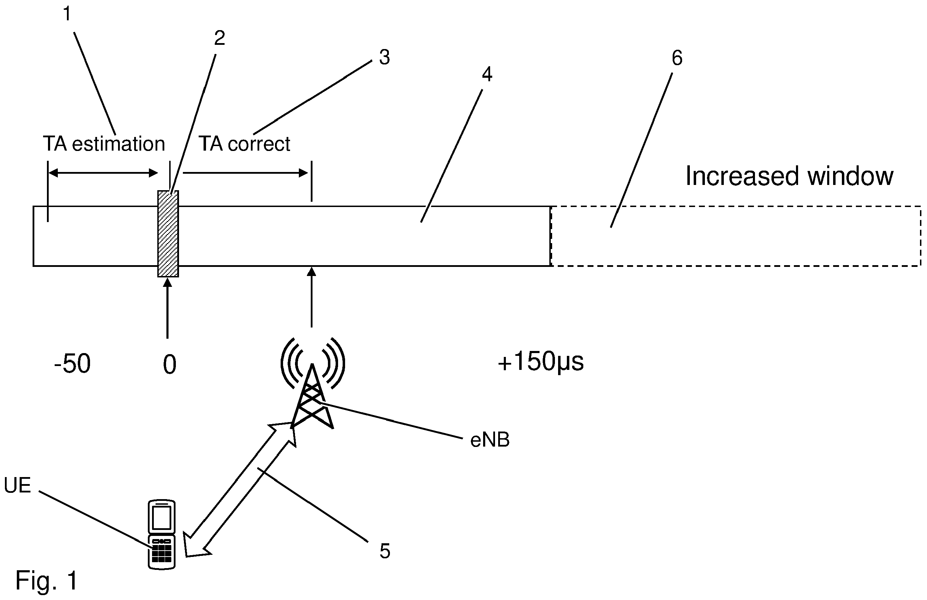

FIG. 1 schematically shows for a user equipment UE of the type to which the present invention is applied as an embodiment the situation relating to the timing of an initial RACH message from the user equipment UE to the base station eNB.

As it is shown the user equipment UE is situated in the cell area of base station eNB, the user equipment being situated in a certain distance 5 from the base station eNB. For starting a communication the user equipment needs to send an initial RACH message to the base station. RACH stands for Random Access Channel and it is typically the first message from a user equipment to the base station when starting to operate together. Typically the user equipment earlier identified as part of the cell selection process the base station as suitable and best available base station, and received the broadcast signals, in particular the SIBs, transmitted by the base station eNB.

For that initial RACH message the user equipment UE has not received any type of indication regarding available resources, that means at what time the message is supposed to be received by the base station eNB. Therefore the base station reserves a RACH window 4, for receiving such initial RACH messages.

For a base station eNB covering a large cell, that means where the distance 5 is very large, in particular larger than 35 km, however the RACH window 4 might not be sufficient, due to the time the signalling from the user equipment UE to the base station eNB is running. In a trivial approach the RACH window would needed to be enlarged by the increased window area 6.

However, according to an advantageous embodiment of the invention the user equipment is capable to send the initial RACH message to the base station eNB at a time so that the RACH message arrives at the base station in the RACH window 4.

For doing so, the user equipment UE carries out a estimation of the timing advance, resulting in a timing advance estimation value 1. Prior to that the user equipment receives from the base station eNB, in particular by means of the SIBs, an indication about a submission time 2. That submission time is in particular indicated by a system frame number (SFN).

The submission time 2 indicates the time when the initial RACH message is in the ideal case expected to arrive at the base station eNB.

The timing advance estimation value 1 is based on the calculation of the distance 5 between the user equipment UE and the base station eNB. In a large cell the distance is most probably the decisive parameter for calculating the timing advance.

The timing advance estimation value 1 is directly translated from the distance, as one timing advance unit is defined in the technology standard to relate to ~1100 m. The timing advance unit likewise stands for 3,69 $\mu$s, taking into account the speed of light. So the timing advance estimation 1 can be shown as time.

Hence the point in time for transmission of the initial RACH message is calculated by subtracting the time difference represented by the estimated timing advance value 1 versus the submission time 2. Effectively the timing advance value is translated in a signal offset value indicating the time offset in prior to the submission time. It is basically a time value, while the timing advance value might be any kind of unit, which uniquely translates into a time offset value.

It is then expected that the base station eNB responds with a timing advance correction value 3, which indicates how the estimated timing advance value 1 of the user equipment UE needs to be corrected for subsequent message transmissions. For that the base station needs to know the estimated timing advance value 1 the user equipment has used.

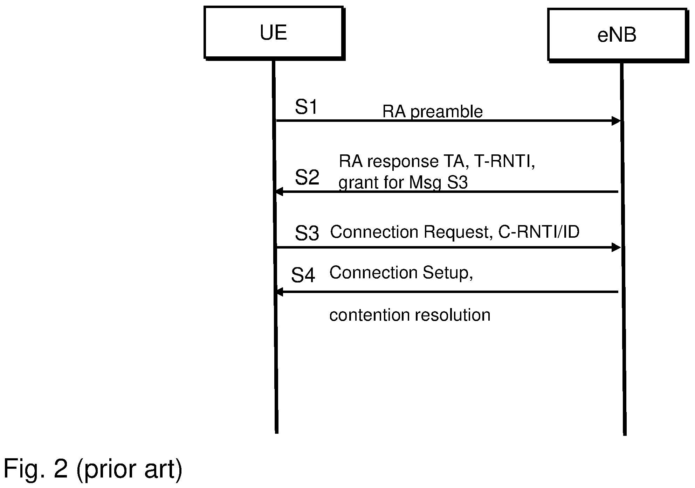

How that is conducted is shown in the sequence diagram of FIGs 2-4. Additionally for the RACH procedure two different approaches are defined, that is the 2-step approach and the 4-step approach.

The 4-step approach according to the prior art is shown in Fig. 2.

It starts with a RACH preamble S1 sent from the user equipment to the base station eNB. This is the start of any dedicated communication between the user equipment and the base station. According to the LTE-technology standard the RACH preamble S1 comprises a RA_RNTI value, which indicates a subframe number of the RACH transmission.

In response the base station sends a RACH response S2. This comprises a timing advance value calculated from the received subframe number and the time when the message arrived. Further information, in particular a grant for sending a third message are usually provided.

With the connection request S3 the user equipment sends a message that requests a connection setup. This message already takes into account the timing advance value received with the RACH response message S2. So it is assured that the message arrives at the right time at the base station eNB.

The base station consequently as fourth step responds to the connection request, usually with a connection setup message S4.

This prior art call sequence shows that the first message from the user equipment, which is the RACH preamble message S1, is sent into the blue. The user equipment in the prior art does not know anything about when will this message arrive at the base station, and if the base station is ready to receive it at the time of arrival.

In the 2-step approach according to the prior art the user equipment already takes into account a timing advance value. However this timing advance value is either known from a previous connection to the base station, provided the user equipment is known as operated stationary. Or the cell of the base station is that small, that a constant timing advance value of ~0 is to be considered.

This approach is consequently not applicable for a user equipment that is moving and operates in a large area cell.

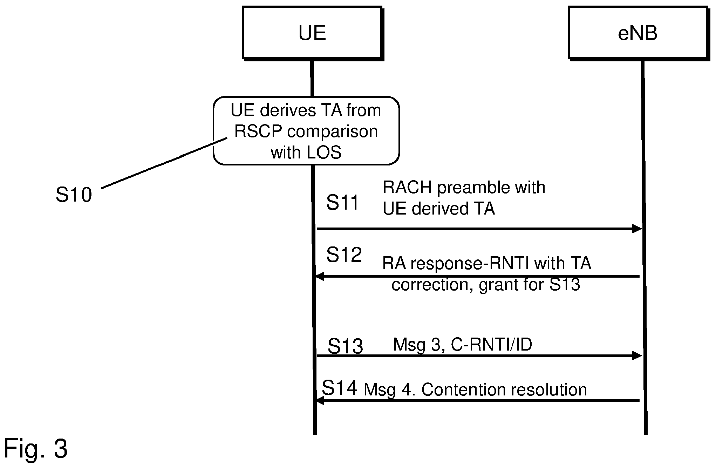

Hence it requires an adaption of the RACH process as shown in FIG. 3. Here the adapted 4-step approach is shown as an exemplifying embodiment of the inventive method.

The environment of the call sequence complements to that in FIG 2, except that the base station eNB is in this example covering a large cell. This means this cell is larger than 35km.

This method starts with step S10, where the user equipment carries out a estimation of the timing advance by means of RSCP comparison with the line of sight (LOS) of the base station. This is based in particular on reference signals received from the base station, e.g. as part of the broadcast which is anyhow received earlier. E.g. with the knowledge of the signal strength of the reference signal at the transmitter of the base station, the user equipment can derive from the signal strength measurements at its receiving circuitry the pathloss resp. the attenuation. From that a value either the distance between user equipment and base station, or directly translated the timing advance value is derived.

The attenuation is for a large cell a good basis for calculating the distance as it is not expected that a lot of buildings or other obstacles lead to reflections etc. that would impact the distance calculation.

Consequently the user equipment is able to use the derived timing advance value for the RACH preamble message S11. This is according to the inventive method even two-fold: The timing advance value is applied to the RACH preamble message in the sense that the point in time for sending the message considers the timing advance value, in relation to an expected submission time, which is broadcasted by the base station.

Second, the derived timing advance value or a representative of it is also part of the RACH preamble message S11.

Based on this message the base station sends a RACH response message S12 comprising a Timing Advance correction value. This TA correction value considers the timing advance value received through RACH preamble message S11, and the time when the RACH message actually arrives at the base station. Still there might be a gap between the expected transmission time and the real arrival time.

In any case, with the timing advance calculation preceding the RACH preamble message the RACH preamble message will in any case arrive in a narrow window around the broadcasted submission time. That means that for a large area cell a much smaller window needs to be reserved for RACH preamble messages.

With the following steps the connection setup is finalized, in particular by connection setup message S13 sent by the user equipment to the base station. The timing of this message now takes into account the TA correction value received with message S12, in relationship to the estimated timing advance value.

With connection setup message S14 the connection setup is finalized.

As it can be seen, the RACH access is with the exemplifying embodiment of the inventive method improved in particular for large area cells.

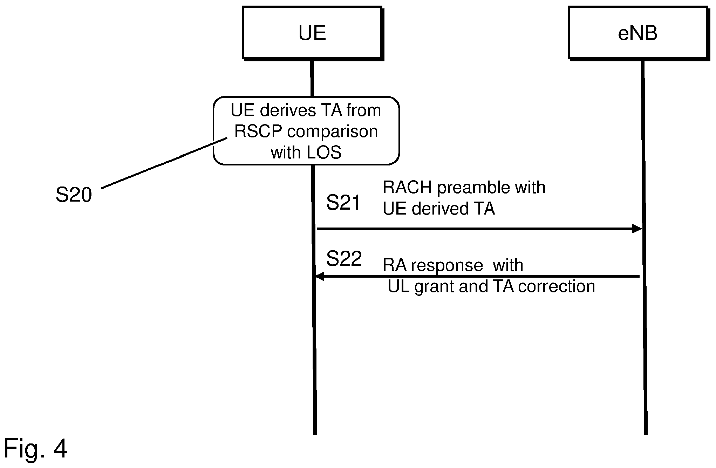

With the quality of estimation this brings the user equipment UE in the position that it practically has available an almost correct timing advance value. Hence also the 2-step approach is applicable, as it is shown in another exemplifying embodiment in FIG. 4.

Basically the same calculation is carried out in step S20, where the timing advance value is calculated. Other ways of calculating, e.g. when the distance is e.g. derived from the geospatial information, are applicable here as well. With exact positions and a flat, deserted area a very accurate timing advance value can be calculated.

Based on this calculation the RACH preamble message S21 taking into account that calculated timing advance value is transmitted. Again this RACH preamble message comprises the calculated timing advance value or a representative of it.

Typically the RACH preamble message already comprises an indication that a connection is requested.

Now in response RACH response message S22 provides not only a RACH response, but also a connection setup. Additionally it comprises the timing advance correction value. This timing advance correction value is used for the subsequent communication, after S22, provided a RACH confirmation is transmitted.

When the user equipment is moving during the connection session, the base station will inform about further changes of the timing advance as part of the regular operation, as already known from the art.

As it is shown in the examples, with the proposed invention the user equipment is able to operate in large cells without large waste of resource on the base station side. Additionally the 2-step approach may be taken way more often than by now, and hence reduce signalling, speed up the connection setup and save power consumption on the user equipment side.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive.

The above detailed description is, therefore, not to be taken in a limiting sense, and the scope of the present invention is defined only by the appended claims, appropriately interpreted, along with the full range of equivalents to which the claims are entitled.

**Claims**

1. Method for a user equipment (UE) operating in a cellular network comprising

    a plurality of base stations (eNB), wherein the user equipment (UE) is operating with at least one base station (eNB) supplying a cell, hereinafter referred to as the addressed base station,
    the method comprising the steps for the user equipment (UE) of:

        - receiving an indication from the addressed base station (eNB) relating to a submission time (2) of a preamble message,
        - estimating a timing advance value (1) relating to a signal transmission from the user equipment to the addressed base station (eNB) by means of calculating a distance value (5) between the user equipment and the addressed base station and translating the distance value into the timing advance value,
        - calculating a signal offset value from said estimated timing advance value,
        - sending the preamble message (S11, S21) to the addressed base station (eNB)

    comprising a value relating to the estimated timing advance value (1) at a specific point in time,
    wherein the point in time for sending said preamble message (S11, S21) is based on said calculated signal offset and said indicated submission time (2), wherein the step of estimating the timing advance value (1) from the user equipment to the addressed base station (eNB) comprises:

        - measuring a received reference signal from said base station (eNB),
        - deriving an attenuation value from said measured signal,
        - wherein the step of calculating the distance value is based on a propagation delay model using line-of-sight,

    **characterized in that**
    the step of calculating the distance value (5) comprises a calculation of a first distance value based on the attenuation value and a calculation of a second distance value based on geographical positions, and wherein in case of a difference between said first and second distance values, the step of translating the first and second distance values into the timing advance value comprises selecting the larger of said first and second distance values as distance value input for said propagation delay model.

2. Method according to claim 1,

wherein the method further comprises the steps of:

- retrieving a response message (S12, S22) from the addressed base station (eNB) in response to said preamble message (S11, S21), said response message (S12, S22) comprising a value relating to a timing advance correction (3) relating to said estimated timing advance value.
- sending a message to the base station (eNB) by considering said received timing advance correction value.

3. Method according to at least one of the claims 1 or 2,
wherein the step of calculating the second distance value (5) comprises ascertaining the geographical position of the user equipment (UE) and the geographical position of the addressed base station (eNB), and carrying out a bee line distance calculation between both positions.

4. Method according to claim 3,
wherein the step of ascertaining the geographical position of the address base station (eNB) comprises retrieving a broadcast signal transmitted by the addressed base station (eNB) comprising a representation of the current geographical position of the base station (eNB).

5. User equipment (UE) for operating in a cellular network comprising a plurality of base stations (eNB), wherein the user equipment (UE) is configured to operate with at least one base station supplying a cell, hereinafter referred to as the addressed base station (eNB),

wherein the user equipment (UE) is configured to:

- receive an indication from the addressed base station relating to the submission time (2) of a preamble message,
- estimate a timing advance value (1) relating to a signal transmission from the user equipment to the addressed base station (eNB) by means of calculating a distance value (5) between the user equipment (UE) and the addressed base station (eNB) and translating the distance value into the timing advance value (1),
- calculate a signal offset value from said estimated timing advance value,
- sending the preamble message (S11, S21) to the addressed base station comprising a value relating to the estimated timing advance value (1) at a specific point in time,

wherein the point in time for sending said preamble message (S11, S21) is based on said calculated signal offset and said indicated submission time (2) wherein the user equipment is further configured to, for the estimation of the timing advance value (1) from the user equipment to the addressed base station (eNB):

- measure a received reference signal from said base station (eNB),
- derive an attenuation value from said measured signal
- calculate a distance value based on a propagation delay model using line-of-sight,

**characterized in that**
the user equipment is further configured to:

- calculate a first distance value based on the attenuation value,
- calculate a second distance value based on geographical positions and being configured to, in case of a difference between said first and second distance values, translate the first and second distance values into the timing advance value by selecting the larger of said first and second distance values as distance value input for said propagation delay model.

6. User equipment (UE) according to claim 5, wherein said calculating of the second distance value (5) comprises to ascertain the geographical position of the user equipment and the geographical position of the addressed base station (eNB), and to carry out a bee line distance calculation between both positions.

**Patentansprüche**

1. Verfahren für ein Teilnehmergerät (*user equipment,* UE), das in einem Mobilfunknetz betrieben wird, umfassend wie folgt:

eine Vielzahl von Basisstationen (eNB), wobei das Teilnehmergerät (UE) mit mindestens einer Basisstation (eNB) betrieben wird, die eine Zelle bereitstellt, worauf hiernach als die adressierte Basisstation Bezug genommen wird, wobei das Verfahren die folgenden Schritte für das Teilnehmergerät (UE) umfasst:

- Empfangen eines Hinweises von der adressierten Basisstation (eNB) in Bezug auf eine Einreichungszeit (2) einer Präambel-Nachricht,
- Schätzen eines Vorhaltezeitwerts (1) in Bezug auf eine Signalübertragung von dem Teilnehmergerät an die adressierten Basisstation (eNB) mittels Berechnen eines Entfernungswerts (5) zwischen dem Teilnehmergerät und der adressierten Basisstation und Übersetzen des Entfernungswerts in einen Vorhaltezeitwert,
- Berechnen eines Signaloffsetwerts aufgrund des geschätzten Vorhaltezeitwerts,
- Senden einer Präambel-Nachricht (S11, S21) an die adressierte Basisstation (eNB), umfassend einen Wert, der auf den Vorhaltezeitwert (1) zu einem spezifischen Zeitpunkt bezogen ist, wobei der Zeitpunkt zum Senden der Präambel-Nachricht (S11, S21) auf dem berechneten Signaloffsetwert und der angezeigten Einreichungszeit (2) basiert, wobei der Schritt Schätzen des Vorhaltezeitwerts (1) von dem Teilnehmergerät zu der adressierten Basisstation (eNB) wie folgt umfasst:

- Messen eines empfangenden Referenzsignals von der Basisstation (eNB),
- Ableiten eines Dämpfungswerts von dem Messsignal,
- wobei der Schritt Berechnen des Entfernungswerts auf einem Laufzeitverzögerungsmodell basiert, das die Sichtlinie verwendet,

**dadurch gekennzeichnet, dass**

der Schritt Berechnen des Entfernungswerts (5) eine Berechnung eines ersten Entfernungswerts, der auf dem Dämpfungswert basiert, und eine Berechnung eines zweiten Entfernungswerts, der auf geografischen Positionen basiert, umfasst, und wobei im Fall einer Differenz zwischen dem ersten und zweiten Entfernungswert der Schritt Übersetzen des ersten und zweiten Entfernungswerts in den Vorhaltezeitwert Auswählen des jeweils größeren des ersten und zweiten Entfernungswerts als Entfernungswerteingang für das Laufzeitverzögerungsmodell umfasst.

2. Verfahren nach Anspruch 1, wobei das Verfahren ferner die folgenden Schritte umfasst:

- Abrufen einer Antwortnachricht (S12, S22) von der adressierten Basisstation (eNB) als Antwort auf die Präambel-Nachricht (S11, S21), wobei Antwortnachricht (S12, S22) einen Wert umfasst, der auf eine Vorhaltezeitkorrektur (3) bezogen ist, die sich auf den geschätzten Vorhaltezeitwert bezieht,
- Senden eine Nachricht an die Basisstation (eNB) unter Berücksichtigung des empfangenen Vorhaltezeitkorrekturwerts.

3. Verfahren nach mindestens einem der Ansprüche 1 oder 2, wobei der Schritt Berechnen des zweiten Entfernungswerts (5) ein Feststellen der geografischen Position des Teilnehmergeräts (UE) und der geografische Position die adressierte Basisstation (eNB) umfasst sowie ein Durchführen einer Entfernungsberechnung einer geraden Strecke zwischen beiden Positionen.

4. Verfahren nach Anspruch 3, wobei der Schritt Feststellen der geografischen Position der adressierten Basisstation (eNB) ein Abrufen eines Sendesignals, das von der adressierten Basisstation (eNB) übertragen wird, umfasst, umfassend eine Repräsentation der derzeitigen geografischen Position der Basisstation (eNB).

5. Teilnehmergerät (UE) zum Betreiben eines Mobilfunknetzes, umfassend eine Vielzahl von Basisstationen (eNB), wobei das Teilnehmergerät (UE) dazu konfiguriert ist, mit mindestens einer Basisstation (eNB) betrieben zu werden, die eine Zelle bereitstellt, worauf hiernach als die adressierte Basisstation (eNB) Bezug genommen wird, wobei das Teilnehmergerät (UE) wie folgt dazu konfiguriert ist zum:

- Empfangen eines Hinweises von der adressierten Basisstation in Bezug auf eine Einreichungszeit (2) einer Präambel-Nachricht,
- Schätzen eines Vorhaltezeitwerts (1) in Bezug auf eine Signalübertragung von dem Teilnehmergerät an die adressierte Basisstation (eNB) durch Berechnen eines Entfernungswerts (5) zwischen dem Teilnehmergerät und der adressierten Basisstation an die Basisstation (eNB) und Übersetzen des Entfernungswerts in einen Vorhaltezeitwert (1),
- Berechnen eines Signaloffsetwerts aufgrund des geschätzten Vorhaltezeitwerts,

- Senden einer Präambel-Nachricht (S11, S21) an die adressierte Basisstation, umfassend einen Wert, der auf den geschätzten Vorhaltezeitwert (1) zu einem spezifischen Zeitpunkt bezogen ist, wobei der Zeitpunkt zum Senden der Präambel-Nachricht (S11, S21) auf dem berechneten Signaloffsetwert und er angezeigten Einreichungszeit (2) basiert, wobei das Teilnehmergerät ferner wie folgt dazu konfiguriert ist für die Schätzung des Vorhaltezeitwerts (1) von dem Teilnehmergerät zu der adressierten Basisstation (eNB) wie folgt voezugehen:
- Messen eines empfangenden Referenzsignals, das von der Basisstation (eNB) kommt,
- Ableiten eines Dämpfungswerts von dem Messsignal,
- Berechnens eines Entfernungswerts basierend auf einem Laufzeitverzögerungsmodell, das die Sichtlinie verwendet,

**dadurch gekennzeichnet, dass** das Teilnehmergerät ferner wie folgt dazu konfiguriert ist zum:

- Berechnen eines ersten Entfernungswerts, der auf dem Dämpfungswert basiert,
- Berechnen eines zweiten Entfernungswerts, der auf geografischen Positionen basiert und im Fall einer Differenz zwischen dem ersten und zweiten Entfernungswert Übersetzen des ersten und zweiten Entfernungswerts in den Vorhaltezeitwert durch Auswählen des jeweils größeren des ersten und zweiten Entfernungswerts als Entfernungswerteingang für das Laufzeitverzögerungsmodell.

6. Teilnehmergerät (UE) nach Anspruch 5, wobei das Berechnen des zweiten Entfernungswerts (5) ein Feststellen der geografischen Position des Teilnehmergeräts und die geografische Position der adressierten Basisstation (eNB) und ein Durchführen der Geraden-Strecken-Berechnung zwischen beide Positionen umfasst.

## Revendications

1. Procédé pour un équipement utilisateur (EU) fonctionnant dans un réseau cellulaire comprenant une pluralité de stations de base (eNB), dans lequel l'équipement utilisateur (EU) fonctionne avec au moins une station de base (eNB) alimentant une cellule, ci-après dénommée la station de base adressée,
le procédé comprenant les étapes pour l'équipement utilisateur (EU) consistant à :

- recevoir une indication de la station de base adressée (eNB) concernant un temps de soumission (2) d'un message de préambule,
- estimer une valeur d'avance temporelle (1) relative à une transmission de signal provenant de l'équipement utilisateur à la station de base adressée (eNB) au moyen du calcul d'une valeur de distance (5) entre l'équipement utilisateur et la station de base adressée et de la traduction de la valeur de distance en valeur d'avance temporelle,
- calculer une valeur de décalage de signal à partir de ladite valeur d'avance temporelle estimée,
- envoyer le message de préambule (S11, S21) à la station de base adressée (eNB) comprenant une valeur relative à la valeur d'avance temporelle estimée (1) à un moment donné, dans lequel le temps d'envoi dudit message de préambule (S11, S21) est basé sur ledit décalage de signal calculé et ledit temps de soumission (2) indiqué, dans lequel l'étape d'estimation de la valeur d'avance temporelle (1) depuis l'équipement utilisateur vers la station de base adressée (eNB) comprend :

- mesurer un signal de référence reçu provenant de ladite station de base (eNB),
- déduire une valeur d'atténuation dudit signal mesuré, l'étape de calcul de la valeur de distance étant basée sur une propagation modèle à retard utilisant une ligne de visée, **caractérisé en ce que** l'étape de calcul de la valeur de distance (5) comprend un calcul d'une première valeur de distance basée sur la valeur d'atténuation et un calcul d'une seconde valeur de distance basée sur des positions géographiques, et dans le cas d'une différence entre lesdites première et seconde valeurs de distance, l'étape de traduction des première et seconde valeurs de distance en valeur d'avance temporelle comprend la sélection de la plus grande desdites première et seconde valeurs de distance comme entrée de valeur de distance pour ledit modèle de retard de propagation.

2. Procédé selon la revendication 1, dans lequel le procédé comprend en outre les étapes consistant à :

- récupérer un message de réponse (S12, S22) de la station de base adressée (eNB) en réponse audit message de préambule (S11, S21), ledit message de réponse (S12, S22) comprenant une valeur relative à une correction d'avance temporelle (3) relative à ladite valeur d'avance temporelle estimée,
- envoyer un message à la station de base (eNB) en tenant compte de ladite valeur de correction d'avance temporelle reçue.

3. Procédé selon l'une au moins des revendications 1 ou 2, dans lequel l'étape de calcul de la deuxième valeur de distance (5) comprend la détermination de la position géographique de l'équipement utilisateur (EU) et de la position géographique de la station de base adressée (eNB), et le calcul d'une distance en ligne droite entre les deux positions.

4. Procédé selon la revendication 3, dans lequel l'étape de détermination de la position géographique de la station de base adressée (eNB) comprend la récupération d'un signal de diffusion émis par la station de base adressée (eNB) comprenant une représentation de la position géographique actuelle de la station de base eNB).

5. Équipement utilisateur (EU) destiné à fonctionner dans un réseau cellulaire comprenant une pluralité de stations de base (eNB), l'équipement utilisateur (EU) étant configuré pour fonctionner avec au moins une station de base alimentant une cellule, dénommée ci-après la station de base adressée (eNB), l'équipement utilisateur (EU) étant configuré pour :

- recevoir une indication de la station de base adressée relative au temps de soumission (2) d'un message de préambule,
- estimer une valeur d'avance temporelle (1) relative à une transmission de signal provenant de l'équipement utilisateur à la station de base adressée (eNB) au moyen du calcul d'une valeur de distance (5) entre l'équipement utilisateur (EU) et la station de base adressée (eNB) et de la traduction de la valeur de distance en valeur d'avance temporelle (1),
- calculer une valeur de décalage de signal à partir de ladite valeur d'avance temporelle estimée,
- envoyer le message de préambule (S11, S21) à la station de base adressée comprenant une valeur relative à la valeur d'avance temporelle estimée (1) à un moment donné,
dans lequel le temps d'envoi dudit message de préambule (S11, S21) est basé sur ledit décalage de signal calculé et ledit temps de soumission indiqué (2),
l'équipement utilisateur étant en outre configuré pour, pour estimer la valeur d'avance temporelle (1) depuis l'équipement utilisateur vers la station de base adressée (eNB) :

- mesurer un signal de référence reçu de ladite station de base (eNB),
- déduire une valeur d'atténuation dudit signal mesuré,
- calculer une valeur de distance en fonction d'un modèle de retard de propagation en utilisant une ligne de visée, **caractérisé en ce que** l'équipement utilisateur est en outre configuré pour :
- calculer une première valeur de distance en fonction de la valeur d'atténuation,
- calculer une première valeur de distance en fonction de positions géographiques,

et étant configuré pour, en cas de différence entre lesdites première et seconde valeurs de distance,

- traduire les première et seconde valeurs de distance en la valeur d'avance temporelle en sélectionnant la plus grande desdites première et seconde valeurs de distance comme entrée de valeur de distance pour ledit modèle de retard de propagation.

6. Équipement utilisateur (EU) selon la revendication 5, dans lequel ledit calcul de la deuxième valeur de distance (5) comprend la détermination de la position géographique de l'équipement utilisateur et de la position géographique de la station de base adressée (eNB), et le calcul de la distance en ligne droite entre les deux positions.

Fig. 1

Fig. 2 (prior art)

EP 3 900 447 B1

UE | eNB

UE derives TA from
RSCP comparison
with LOS

S10

S11 RACH preamble with
UE derived TA

S12 RA response-RNTI with TA
correction, grant for S13

S13 Msg 3, C-RNTI/ID

S14 Msg 4. Contention resolution

Fig. 3

EP 3 900 447 B1

Fig. 4

EP 3 900 447 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017111908 A1
- WO 2018141179 A1

- US 2009161599 A1

**Non-patent literature cited in the description**

- **ERICSSON.** On Two-step Random Access and Random Access Latency. *3GPP TSG-RAN WG2 TDoc R2-1700413*